# EUROPEAN PATENT SPECIFICATION

(11) **EP 2 859 149 B1**
(45) Date of publication and mention of the grant of the patent: **06.05.2020**
(21) Application number: 13721125.6
(22) Date of filing: 18.04.2013
(51) Int. Cl.: E01C 13/08, D06N 7/00

(54) **SUBSTRATE ELEMENT FOR AN ARTIFICIAL GRASS PITCH AND METHOD OF MANUFACTURING THEREOF**
SUBSTRATELEMENT FÜR EINEN KUNSTRASENPLATZ UND HERSTELUNGSVERFAHREN HIERFÜR
ELÉMENT DE SUBSTRAT POUR GAZON ARTIFICIEL ET SON PROCÉDÉ DE FABRICATION

(30) Priority: 08.06.2012 NL 2008961
(43) Date of publication of application: 15.04.2015
(73) Proprietor: Ten Cate Thiolon B.V., 7443 RE Nijverdal (NL)
(72) Inventor: VAN BALEN, Jeroen Albert, 50674 Köln (DE); OLDE WEGHUIS, Marinus Hendrikus, 7574 AB Oldenzaal (NL)
(74) Representative: Nederlandsch Octrooibureau
(86) International application number: PCT/NL2013/050280
(87) International publication number: WO 2013/183989

(56) References cited:
- WO-A1-01/96664
- WO-A1-2012/105827
- WO-A2-2008/088919
- CN-Y- 2 679 231
- JP-A- 9 273 110
- US-A1- 2007 248 772

## Description

### BACKGROUND OF THE INVENTION

### 1. Field of the Invention

The invention relates to a substrate element for use in an artificial grass pitch, in particular an artificial grass playing field, having a plurality of protuberances evenly distributed across and extending from one of its surfaces. The invention also relates to a substrate composed of such substrate elements and to an artificial grass pitch comprising such a substrate.

### 2. Description of the Related Art

A substrate element having protuberances on its upper side has been proposed in unpublished Dutch patent application no. NL2005847.

An underlayment layer configured to support an artificial turf assembly has been disclosed in WO 2008/088919. The top side of the underlayment layer comprises upward oriented projections defining channels suitable for water flow

Nowadays, many sports, such as field hockey, tennis, American football, etc. are being played on an artificial grass playing field. Although sportsmen and sportswomen suffer fewer injuries when falling or sliding etc. on natural grass playing fields due to the soft surface, such playing fields suffer a great deal, in particular from the above-mentioned sports, because of the intensity with which they are played on and the changing influences of the weather.

By contrast, artificial grass playing fields require less maintenance and can be played on much more often than playing fields made of natural grass. In order to be able to make it possible to render the playing style on the artificial grass playing field as similar as possible to that on the natural grass playing field, with the current artificial grass pitch systems, a layer of granular material, such as sand or plastic granules, is scattered between the artificial grass fibres, with the thickness of the layer generally being approximately 40-60% of the upright plastic fibres. This layer of scattered granules not only provides a softer, more damping surface, which causes fewer injuries, but also results in an improvement in the style of playing.

Scattering a thick layer of granular material onto artificial grass playing fields has a number of drawbacks. It requires a substantial layer of granular material; currently, the layer thickness of the granular material of artificial grass pitches is between 2.5 and 5.5 cm. Not only is it more labour-intensive to lay such an artificial grass playing field than a natural grass field, but even after it has been laid, a filled-in artificial grass playing field requires maintenance. The thick layer of granular infill material, which is initially distributed evenly, may become disturbed as a result of frequent playing. Consequently, in particular at locations that are played on very frequently, for example the goal area, areas where hardly any infill material remains may occur in the artificial grass playing field, thus adversely affecting play and leading to an increase in the risk of injury. With an infilled artificial grass playing field, the distribution and amount of granular material has to be checked regularly and be corrected, if necessary.

There are many factors that must be carefully balanced in designing an artificial grass playing field in order to fulfil all of the conflicting requirements of e.g. ball rebound, ball roll, shock absorption, energy restitution, rotational resistance, linear slide and skin abrasion. Various sports bodies provide standards for such requirements. Existing artificial pitch designs require a number of separate components that may be provided and installed by different parties. These components include the sub-surface, the drainage, the substrate, the grass layer and the infill. The final playing properties depend on the interaction of these components, which must be carefully matched. Nevertheless, because each pitch is individually laid, variations in the final results may be observed.

Furthermore, although artificial playing fields have approached the performance of natural grass, none has completely realised the equivalent levels of shock absorption and energy restitution presently encountered in a top quality FIFA standard natural grass pitch. In this context, it is noted that shock absorption is generally measured as a percentage reduction in the shock (maximum deceleration) compared to a similar impact on a concrete surface. Values of greater than 55% are generally required for most sports. Energy restitution is a measure of how much of the kinetic energy of a body is returned to the body after the impact and is measured as the ratio of the square of the velocity after impact to that before. In general, artificial playing surfaces have been found to have energy restitution values that are higher than natural surfaces. This results in an unnatural springiness when running and can and has also been found undesirable for ergonomic and physiological reasons. Energy restitution values below 40% are generally desirable for most purposes. Values of below 15% are however not desirable as below this value the surface becomes heavy as in the case of soft sand. In the following, all references to energy absorption and energy restitution values are made with respect to the testing procedures established according to the FIFA Quality Concept Norm, Handbook of Test Methods for Football Turf, January 2012 Edition.

It would be desirable to provide an improved system that allowed a number of the above properties to be better integrated together and that could more closely be adapted to the requirements of the respective sports bodies.

### BRIEF SUMMARY OF THE INVENTION

According to the present invention, there is provided a substrate element according to the features of claim 1, adapted to be assembled to form a substrate for use in an artificial grass pitch, in particular an artificial grass playing field, wherein the substrate element comprises a substrate body and at least one side of the substrate body comprises a plurality of protuberances, evenly distributed across substantially its entire surface and extending therefrom and in that the substrate element has a hardness of between 30-70 Sh(A). An artificial grass pitch composed of such substrate elements has the surprising effect that the substrate additionally offers such damping properties that the artificial grass pitch has playing characteristics which are more true to life and render the addition of a considerable amount of granular infill material superfluous. In particular, an artificial grass pitch composed of such substrate elements can on its own provide substantially all the requirements in terms of energy restitution and shock absorbance. By choosing materials in the hardness range of 30-70 Sh(A), the body of the substrate can effectively provide the necessary bulk for shock absorption, while the protuberances ensure low energy restitution by folding on impact.

In order to ensure sufficient shock absorption, the substrate body preferably has a thickness of at least 4 mm, more preferably at least 8 mm. In actual fact, although the thickness of the substrate body is important e.g. as a support for the protuberances, the net thickness of the substrate in the collapsed state of the protuberances is also important in determining the total amount of material available for absorbing the shock and providing restitution. Preferably, the total amount of substrate material corresponds to an overall average thickness of at least 8 mm, more preferably at least 12 mm. This value will also take into account possible variations in shape of the lower side of the substrate body, which may also be provided with drainage channels, gripping protrusions or spacers if the protuberances extend from the upper side. In terms of mass, the substrate element may have an average mass of between 2 Kg and 5Kg per square meter, excluding the artificial grass. It will be understood that for a given performance a lighter substrate may be more desirable in terms of material cost.

In a preferred embodiment, the substrate element has a hardness of 50-65 Sh(A). Such a hardness value has been found particularly appropriate in providing an effective playing surface for football and surprisingly is able to achieve this on a solid undersurface such as compacted ground or concrete. This means that a quality pitch can be installed easily without requiring attention to the undersurface.

If the substrate element is at least made of styrene butadiene rubber (SBR) or EPDM rubber, it is possible to thus achieve an improved artificial grass pitch, which not only has the desired constant and true-to-life playing characteristics, but can also be produced in a simple and inexpensive manner by means of relatively simple production techniques. By using SBR or EPDM rubber, the substrate elements can be produced in large numbers using a pressing or moulding procedure. Other rubbers or vulcanisable materials may also be employed including mixtures of rubbers and also recycled rubber material. Thermoplastic elastomers may be particularly useful from a recycling perspective in that, when combined with compatible grass fibres, the substrate element can be easily recycled without requiring separation of grass and substrate.

In addition, the substrate element may contain additives, such as fillers and/or an antistatic agent. Fillers such as chalk, carbon-black, glass-fibrils etc. may be used to reduce cost, adjust the substrate properties, enhance tensile strength or, ensure conductivity.

In other embodiments, a substrate element according to the invention may to this end be characterized by the fact that the substrate body is composed of several layers, in which case in particular the adjacent layers have a mutually different composition. More specifically, each layer may have a different hardness Sh(A). This offers the possibility of producing different embodiments of substrate elements, depending on the desired energy restitution and shock absorbance and the intended use in a substrate or artificial grass pitch in order thus to obtain the desired playing characteristics. Thus, the substrate element, for example, may be composed of a 'relatively stiff' or 'relatively hard' bottom layer and a 'relatively soft' or 'less hard' top layer. In general, the protuberances will be integrally formed with the top layer. Nevertheless, this need not be the case, and it will be understood that they may be formed from the same material as a hard bottom layer with a relatively softer upper layer formed over the bottom layer and partially surrounding the protuberances.

Although reference is given to the substrate having a hardness measured on the Shore A scale, it will be understood that materials having similar properties according to different hardness scales may also be used and would also fall within the scope of this definition. In particular, if desired, the substrate element may contain a foamed material in order to achieve a similar effect on the energy restitution, shock absorbance and playing characteristics, even though Shore A values are not usually used for such foams.

In a further embodiment, the substrate element according to the invention is provided with reinforcement. In this case, the reinforcement may be formed by one or more reinforcement filaments which are incorporated or embedded in the substrate element, or may contain a reinforcing fabric. This benefits the strength, stability (in particular the dimensional stability) and, above all, the life of the assembled substrate and artificial grass pitch, since this makes it possible to absorb the forces which are exerted on the pitch construction during outdoor games more efficiently and dissipate them through the base of the artificial grass pitch. The skilled person will be well aware of the different reinforcing materials that may be used, including artificial materials such as polyester or fibre-glass or natural materials such as sisal.

In a further embodiment, the reinforcement is electrically conductive, so that any static electricity which may be generated during outdoor games can be dissipated from the artificial grass pitch as a safety measure for the players. If desired, the electrically conductive reinforcement may form part of a pitch-heating system, so that the artificial grass pitch, which is thus produced can be played on during the entire year.

According to an important aspect of the invention, the protuberances are elongate, having a length greater than their width. In this context, the length direction is understood to be the direction normal to the playing surface i.e. extending away from the upper or lower side of the substrate body as the case may be. Without wishing to be bound by theory, it is believed that for such elongate forms, the response to an applied force will be non-linear. In particular, for such upstanding and relatively unsupported protuberances, initial axial compression will be rapidly followed by bending or buckling and subsequent collapse. During collapse, tensile forces come into play within the protuberances and between the protuberances and the substrate body. Such tensile forces dissipate more energy than compressive forces normally encountered during impact on a conventional substrate. Once collapsed, the protuberances will operate together with the substrate body in a relatively linear compressive regime. As a result of this collapse mechanism, energy restitution values can be significantly lower than would be the case using the same amount of material in simple compressive mode. It will be understood that rubbers are highly efficient in energy restitution and a substrate made from a uniform layer of rubber alone could have an undesirably high energy restitution value of 80% or more. By including the protuberances as described above, the energy restitution value may be reduced to below 40% or even below 30%, while remaining above 18% and still maintaining the required shock absorbance values. Most surprisingly, these values may be achieved even on a rigid undersurface such as concrete or clay. Depending upon the specific materials and the result required, the protuberances preferably have a shape factor of between 2 and 5. In the present context, the shape factor is used to refer to the ratio of the height of the protuberance to its width at the point at which buckling or bending occurs. Protuberances with low shape factors will generally be more rigid and have greater energy restitution. Protuberances with high shape factors will collapse more easily and have lower energy restitution. It will however be understood that very high shape factors may not be desirable since such protuberances would collapse without any noticeable effect. Preferably, the protuberances as a whole should be able to support an initial load without buckling of more than 100 g/cm². The protuberances are between 5 mm and 15 mm in length. Their width, measured as the average over their height, is preferably between 2 mm and 10 mm, more preferably between 3 mm and 7 mm.

The skilled person will be well aware of how the shape of the protuberances may be adapted according to the impact response required. In particular, the protuberances may be slightly tapered towards their free ends. This can increase their bending resistance and is also convenient from a manufacturing perspective. It may also be useful in making the bending and collapse of the protuberances less temperature-dependent. A taper of between 1 degree and 5 degrees may be provided, preferably around 2.5 degrees.

The skilled person will also understand that the number or area density of the protuberances will also determine the final properties of the substrate. As has been indicated above, the protuberances may be evenly distributed across substantially its entire surface although this is not intended to exclude possible local variations in the number or density of the protuberances. Furthermore, there may be regions where for certain reasons one or more protuberance is absent. The protuberances are distributed at a density of between 0.1 and 8 protuberances per square centimetre, preferably between 1 and 2 per square centimetre. For protuberances having complex shapes or integrally formed together, this value may have little meaning and in which case a more relevant measure is the maximum unsupported span between adjacent protuberances. This distance is preferably between 2 mm and 20 mm, preferably between 5 mm and 10 mm.

According to a further aspect of the invention, the free ends of the protuberances may be rounded. Not only do such rounded surfaces provide greater comfort and reduced risk of abrasion for upstanding protuberances, they can also facilitate the buckling mechanism by which the protuberances collapse. This can be further enhanced by making the free ends asymmetric, whereby collapse in one particular direction is favoured. If greater stability of the protuberances is required, the free ends may be made flat. According to specific embodiments, the protuberances may have a round cross section. In this context, round is intended to refer to the fact that the protuberance can bend equally in all directions and need not be limited to shapes that are perfectly round. Other rotationally symmetric cross-sections may achieve the required result. Alternatively, the protuberances may have an elliptical or otherwise elongated cross section or one which is polygonal in shape. In that case, it will be understood that the protuberances will bend in one direction more easily than in another direction and asymmetric properties may be achieved if so desired. Such protuberances may then be randomly distributed over the substrate to achieve a homogenous effect. Although reference has been given to a plurality of protuberances, it will be understood that these may also be linked together to form structures. A single extended protuberance is considered to fall within the scope of the above definition, to the effect that it performs the same function as a plurality of individual protuberances in terms of bending and collapsing under an applied force.

An additional factor that may be noted is that protuberances which have a round cross section, such as a circle or an ellipse, have the advantage that forces which are exerted thereon during use, can be distributed more evenly and be dissipated to the base. This benefits the life of the substrate and limits the number of injuries of the players. In addition, a round cross section of the protuberances offers the advantage that the protuberances can move more freely between the artificial grass fibres, thus producing an improved damping action which in turn limits the occurrence of injuries.

If, according to a further feature, each substrate element is provided with coupling elements which cooperate with corresponding coupling elements forming part of at least one other substrate element, the time required for the construction of the entire substrate and the final artificial grass pitch is shortened. In addition to a quick installation, the coupling elements can also produce a strong construction which is able to withstand, for example, intense types of sports, such as rugby or football. Alternatively, the substrate may be manufactured in endless lengths in a continuous process and then rolled out as required.

In a particularly preferred embodiment, the substrate element is furthermore provided with artificial grass fibres which extend from the upper side of the substrate body between and beyond the protuberances. In this way, separate substrate elements provided with artificial grass fibres are provided which can easily be transported in parts and from which a fully functional artificial grass pitch can be constructed on site (in the sports grounds or stadium) from the different substrate elements part by part.

Any appropriate form of artificial grass fibres may be used. Most preferably, the fibres are mixed bunches i.e. having blades of different forms of artificial grass mixed together. Preferred materials are polyethylene and polypropylene. The length of the pile will depend on the sport to be played and on the length of the protuberances. Most preferably the pile has a length that extends at least 10 mm beyond the free ends of the protuberances, for football, preferably at least 20 mm.

The artificial grass fibres are preferably attached at the lower side of the substrate body. This may be achieved by any appropriate technique. A most preferred technique is by tufting through the substrate body. In order to produce a durable connection between the artificial grass fibres and the substrate element, it is possible, according to the invention, to provide the substrate element with a coating on its lower side, covering the connection of the artificial grass fibres.

The substrate described above can have a shock absorption value of at least 50% and an energy restitution value of less than 40%, even when placed onto a solid base such as concrete or packed clay. More preferably these values may be at least 55% and below 35% respectively even without infill. Nevertheless, infill may be provided as required for other reasons, or to further adjust the properties should that be desired. With appropriate infill, the substrate described above can have a shock absorption value of at least 60% and an energy restitution value of less than 32% on a solid undersurface. Infill may be rubber, coconut husk, sand or the like and the protuberances can assist in retaining it in its position. In particular, protuberances of elongate cross-section or forming closed shapes may be useful in further preventing infill movement.

In a preferred form of the invention, the protuberances are provided on the upper side of the substrate body and extend upwards. In this case, there is provided a substrate element, adapted to be assembled to form a substrate for use in an artificial grass pitch, in particular an artificial grass playing field, wherein the upper side of the substrate element comprises several protuberances, which are evenly distributed across substantially its entire surface and extend from the upper side, and wherein the substrate element has a hardness of between 30-70 Sh(A). Nevertheless, it has surprisingly been identified that the invention also applies to protuberances that extend downwards from the lower side of the substrate body. Substrates having protuberances extending both upwards and downwards may also be provided. The protuberances on the upper and lower sides need not be aligned and the force can be transmitted in an indirect line through the substrate body. In this case, additional tensile forces may be generated at the junctions between the respective protuberances and the substrate body. In the case of protuberances extending downwards, operation usually depends on the undersurface being rigid or at least solid such that the protuberances can support thereon. A granular undersurface, such as earth or sand would therefore be less suitable, unless covered by a geotextile or the like, since the protuberances could become embedded in the undersurface and would no longer be able to collapse.

The invention further also relates to a method of manufacturing an artificial grass substrate having a shock absorption value of at least 50% and an energy restitution value of less than 40%, comprising: providing a resilient substrate body having a body thickness; providing collapsible protuberances extending from the substrate body, the collapsible protuberances being arranged to absorb energy by collapsing from an upright position to a bent position when subjected to an axial load; forming a grass pile of artificial grass fibres extending from the upper side of the substrate and beyond the collapsible protuberances. The grass pile is preferably applied using a tufting technique although other processes may also be applicable.

The protuberances are preferably arranged to support a weight without buckling, of at least 50 g/cm2, preferably at least 100 g/cm2. The protuberances may all be arranged to collapse at the same load or may be arranged to collapse at different loads, ensuring a more gradual effect.

Most preferably, the method comprises integrally forming the collapsible protuberances with the substrate body from the same material. For rubbers, this may be achieved in a moulding or vulcanising procedure. For thermoplastic materials, injection-moulding techniques may be used.

According to a most preferred form of the method, the substrate is laid onto a solid undersurface and achieves the desired energy characteristics without further additions as described above. Such a method is simple, efficient and repeatable and once the substrate has been manufactured according to specification, testing of the laid pitch need not be required.

### BRIEF DESCRIPTION OF THE DRAWINGS

The invention will now be explained in more detail with reference to the following drawing of a number of exemplary embodiments, in which:
Fig. 1 shows a schematic cross-section of an artificial grass pitch according to the prior art, provided with filled-in granular material;
Figs. 2 to 4 show schematic cross-sections of different embodiments of substrate elements according to the invention;
Fig. 5 shows a plan view of the embodiment of Fig. 3;
Fig. 6 shows a plan view of an embodiment of substrate elements, which can be connected to one another;
Figs. 7 and 8 show perspective views of the upper and lower surfaces of substrate elements, which can be connected to one another according to a further embodiment of the invention;
Figs. 9a and 9b show schematic cross-sections through further embodiment of the invention provided with reinforcement;
Figs 10a and 10b show schematic cross-sections through further embodiments of the invention in which the substrate is composed of multiple layers;
Fig. 11 shows a schematic cross-section through a substrate element in which protuberances extend downwards;
Fig. 12 shows a further embodiment of a substrate element according to the invention in perspective view with hollow conical protuberances;
Fig. 13 shows an embodiment of the invention in perspective view with cylindrical protuberances;
Fig. 14 shows a substrate element not according to the invention, with a single grid shaped protuberance; and
Figs 15 and 16 show cross-section and plan views of a preferred embodiment of a substrate having tapered protuberances.

### DESCRIPTION OF ILLUSTRATIVE EMBODIMENTS

For a better understanding of the invention, similar parts illustrated in the various figures are denoted by the same reference numerals in the following description of the figures.

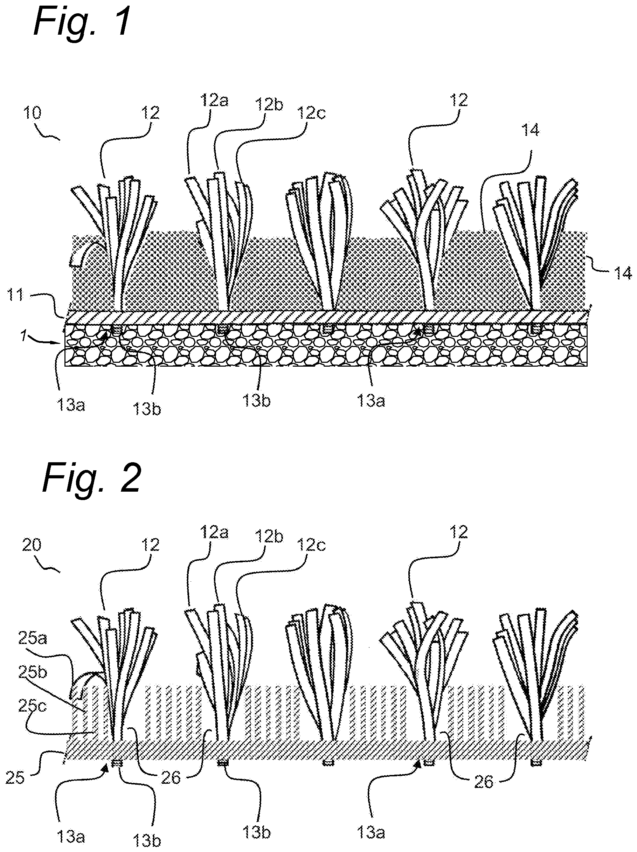

Fig. 1 shows an embodiment of an artificial grass pitch according to the prior art. The artificial grass pitch 10 in Fig. 1 comprises a substrate 11 and artificial grass fibres 12. Each of the artificial grass fibres 12 consists of a bundle of fibres, denoted in the figure by reference numerals 12a, 12b and 12c. The substrate 11 is supported on an undersurface of sand 1.

These fibres 12a, 12b, 12c may, for example, be intertwined. The plastic fibres 12 are attached to the substrate 11 by means of tufting or weaving.

A layer of granular infill material 14 is arranged between the plastic fibres 12, indicated in this figure for illustrative purposes as multiple spheres shown on an enlarged scale. Such granular infill material, also referred to as infill, may consist of one material, such as for example sand, rubber or coconut husk, but may also be composed of a combination of materials in order to obtain specific properties of the artificial grass pitch.

The infill 14 has multiple functions. Firstly, it acts as a damping material when the grass is being played on. This makes the artificial grass pitch softer, thus rendering it more like a true-to-life pitch. Secondly, the infill 14 serves as a lateral support for the artificial grass fibres 12 to prevent these from being flattened while the pitch is being played on.

Fig. 2 shows an embodiment of a substrate element according to the invention. The substrate element 20 in Fig. 2 comprises a substrate body 25 and different artificial grass fibres 12. Each of the artificial grass fibres 12 consists, for example, of a bundle of filaments and/or tape yarns, denoted in the figure by reference numerals 12a, 12b and 12c. These artificial grass fibres do not differ in principle from the artificial grass fibres used in the prior-art artificial grass pitches. However, the substrate is different.

In contrast to the prior-art substrate 11, the substrate body 25 according to the invention is provided with protruding parts 25a, 25b and 25c towards the free ends of the artificial grass fibres. These protruding parts or protuberances 25a, 25b and 25c extend between and alongside the artificial grass fibres 12 and have a length (or height) which is at most equal to the length of the artificial grass fibres 12 used. As can be seen in Fig. 2, the protuberances 25a, 25b and 25c are integral with the substrate body 25 and thus do not form separate elements which have to be connected to the substrate body 25 in some way or another. The substrate element 20 at least partly assumes the damping function of the infill. However, in a practical embodiment it is possible to use a limited amount of infill. In this case, a layer thickness of between 0.5 and 1.5 cm (or 40-60% of the length of the artificial grass fibres) is conceivable.

Subsequently, artificial grass fibres 12 can be fitted at the free positions 26 in the substrate body 25 and between the protuberances 25a-25b-25c by means of different techniques. Often, the artificial grass fibres 12 are fitted through the substrate body 25 (e.g. by tufting) where they are attached at the lower side 25a (on the first side) of the substrate 25 at attachment points 13a. At these attachment points 13a, artificial grass fibre loops 13b may be formed, such as are created by tufting the artificial grass fibres into the substrate. At these attachment points, the artificial grass fibres 12 may also be, for example, inserted into the substrate or be fitted in the substrate in any other way, following which the artificial grass fibres are connected to (or fused with) the substrate by means of, for example, ultrasonic welding.

Another way of attaching the artificial grass fibre loops 13b to the substrate is by means of powder-coating. In the case of powder-coating, a powder layer is sprayed onto the lower side 25a of the substrate body 25 and is then fused with the substrate body 25 in order to produce a durable connection between the artificial grass fibres and the substrate.

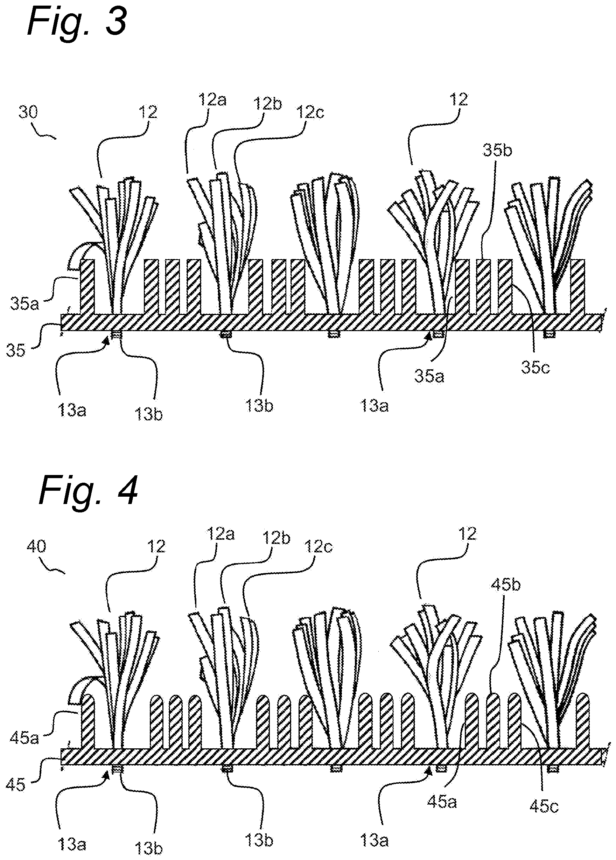

Fig. 3 shows substrate element 30 in which the substrate body 35 comprises protuberances 35a, 35b and 35c having a cross section which is wider than that of the protuberances in Fig. 2. Depending on the desired damping effect or generally depending on the desired effect on the playing characteristics of the respective artificial grass pitch, the dimensions (height or cross section) and shape of the protuberances may be varied.

Thus, the protuberances may have a round cross section, but also an elliptical or a polygonal cross section, depending on the desired properties of the artificial grass pitch. As can be seen in Fig. 4, the protuberances 45a, 45b and 45c are in this case provided with rounded free ends, while the protuberances in Fig. 2 and 3 have an angular shape. Rounded free ends reduce the risk of injuries and may furthermore influence the playing characteristics, for example the bouncing behaviour of a game attribute (ball, rugby ball, etc.).

The characteristic properties of the protuberances (height, shape and cross section) may differ at different locations on the artificial grass pitch, since not all locations/areas of an artificial grass pitch are played on with the same frequency. Thus, in the case of a game of football, the area around the centre spot or the goal are often played on more frequently than other positions on the field (near the lines and in the corners). At these locations, the substrate and in particular the protuberances may be configured differently with regard to design and dimensions.

Making the substrate from a thermoplastic material makes production thereof relatively simple and inexpensive. The addition of a material with elastomeric properties imparts more shock absorbance to the substrate. It is possible to use several material compositions to achieve optimum material properties (and thus playing characteristics).

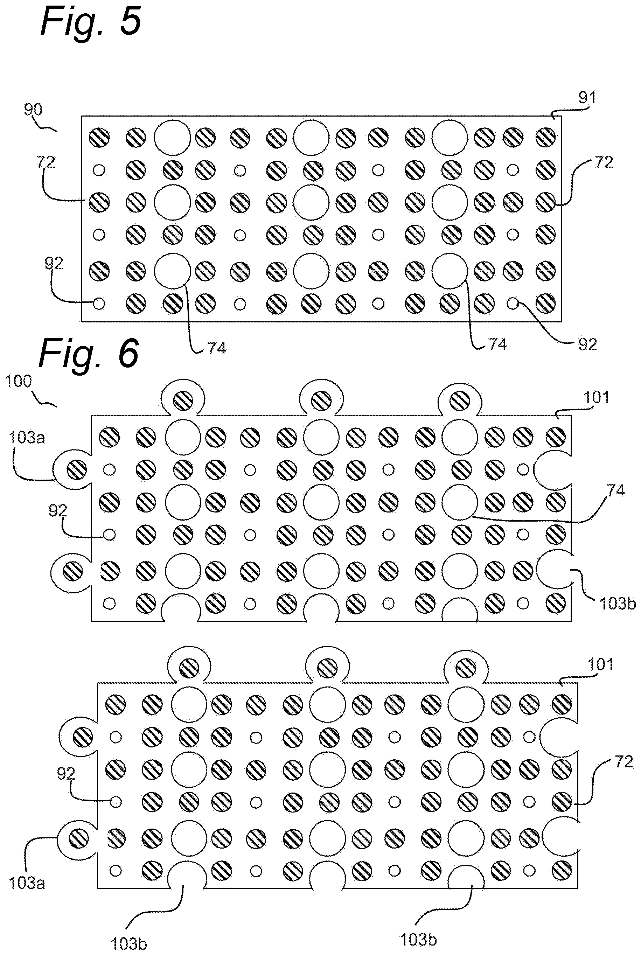

Fig. 5 shows an exemplary embodiment of a substrate element 90, which has several drainage ducts 92 between the artificial grass fibres 74 and the protuberances 72 for draining off precipitation. Depending on the desired drainage, a greater or smaller number of drainage ducts 92 can be provided in the substrate body 91.

Fig. 6 shows two substrate elements 101 which can be connected to each other and to further substrate elements (not shown). In this figure, the substrate elements can be coupled to one another by means of mutually cooperating complementary coupling means 103a and 103b, but other known connecting techniques (not shown) are also possible. The use of such connecting elements makes installation of the artificial grass pitch quicker. It also makes it easy to modify the size of the pitch (increase or decrease) and to carry out maintenance (by replacing a substrate element).

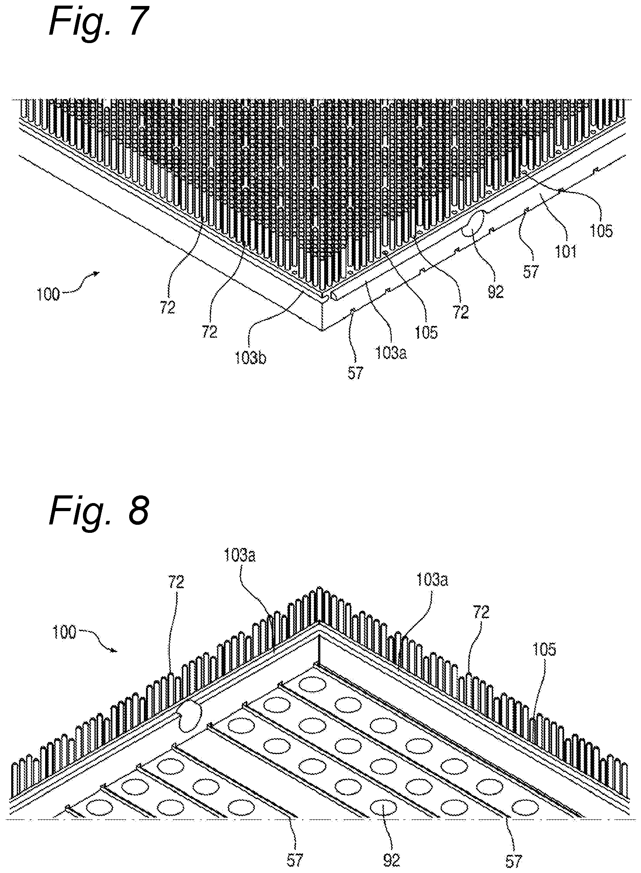

Figs. 7 and 8 show substrate element 100 in perspective from different points of view, which can be coupled to each other by means of the protruding edges 103a and 103b. The substrate body 101 are provided with a plurality of protuberances 72 which protrude upwards from the substrate body 101. The artificial grass fibres 12 may be fitted between the protuberances 72 in the positions 105 dedicated for the purpose, for example by means of tufting. The loops which are created on the bottom side of the substrate elements due to the tufting drop into the recesses 57 which are provided for this purpose in the substrate body 101 and which are configured as slots in this embodiment. The substrate elements 100 are furthermore provided with a drainage system 92 which can drain off rainwater falling on the artificial grass system.

If desired, the connection between the substrate elements may also be reinforced further after installation by means of an adhesive connection or other connecting means.

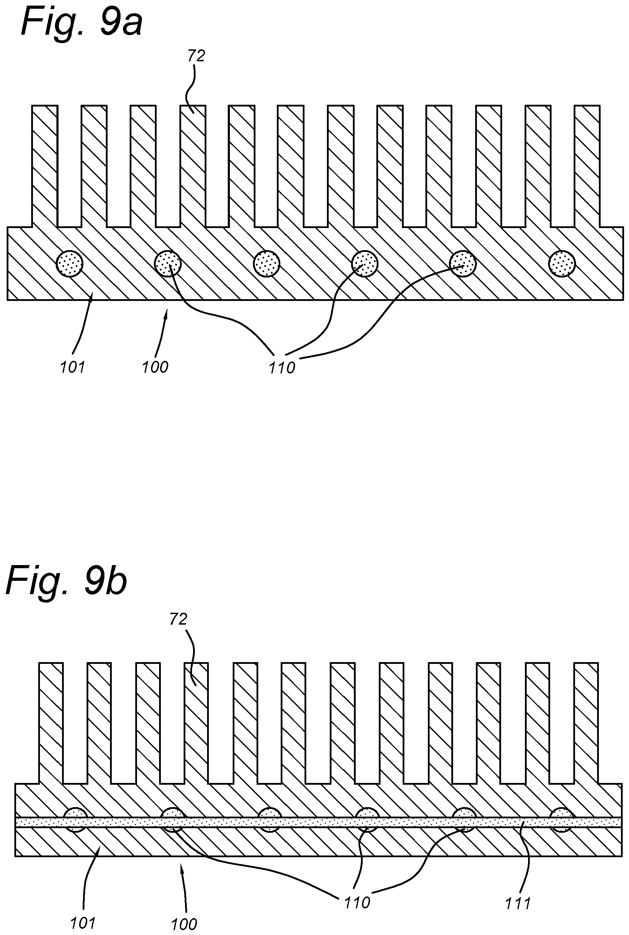

Fig. 9a illustrates a substrate element 100 which is provided with a reinforcement 110. The reinforcement 110 is incorporated or embedded in the substrate body 101 in the form of reinforcing wires or fibres. The reinforcement may be made of, for example, polyester, glass fibre or of sisal.

In Fig. 9b, the reinforcement is made of a fabric which is composed of a grid of reinforcing wires 110 and 111 and is embedded in the substrate body 101.

The use of a reinforcement as illustrated in the exemplary embodiments of Figs. 9a and 9b benefits the strength, stability and, above all, the life of the substrate element. In particular, the life of a substrate composed of several substrate elements and the artificial grass pitch constructed thereof is increased as forces which are exerted on the entire pitch structure during the outdoor games can be absorbed more efficiently and be dissipated to the base of the artificial grass pitch.

In another embodiment, the reinforcement 110 may be made of an electrically conductive material. This makes it possible to dissipate any static electricity which may be generated during the outdoor games from the pitch structure and render it safe.

Apart from being able to dissipate static electricity from the pitch structure, a reinforcement which is made of electrically conductive material and embedded in the substrate body 101 (e.g. in the form of electrically conductive reinforcing wires 110, 111) may form part of a pitch-heating system as a heating element. As a result thereof, an artificial grass playing field which is fitted therewith can be played on during the entire year and irrespective of weather conditions.

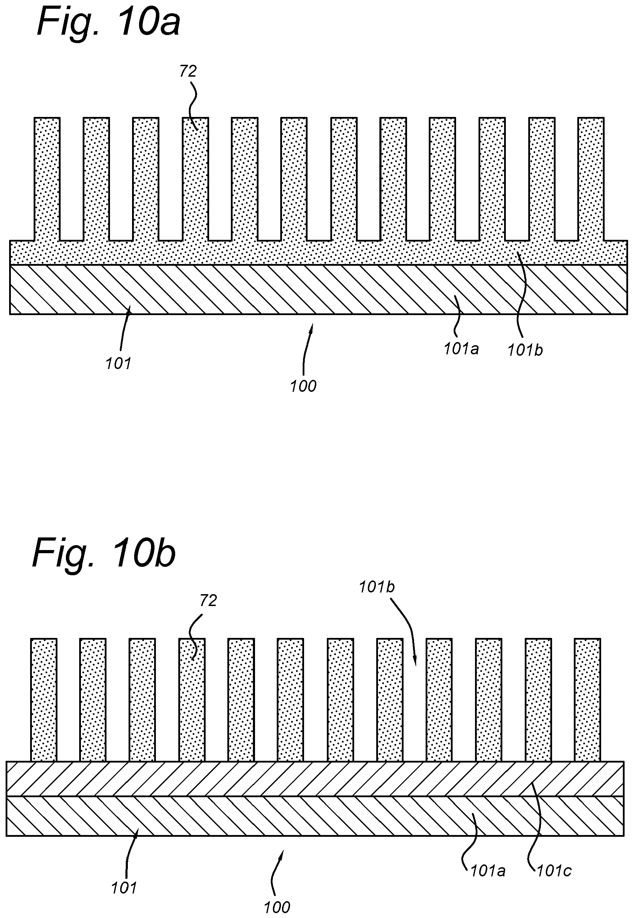

Figs. 10a and 10b show another embodiment of a substrate element according to the invention.

In Fig. 10a, the substrate element 100 is divided into two part layers, denoted by reference numerals 101a and 101b, respectively. Each layer 101a and 101b, respectively, is made of a different material (or composition) and, in particular, each layer has a different hardness Sh(A). In particular, the layer 101a, which serves as a bottom layer for the substrate body 101, may be made of a relatively stiff or hard material, whereas the upper layer 101b including the protuberances 72 may be made of a relatively soft material.

By suitably choosing the types of material of different hardness, it is possible to produce an artificial grass pitch with the desired energy restitution and shock absorbance in order to replicate the playing characteristics of the grass pitch as closely as possible or to improve these. Likewise, it is possible to make one of the layers 101a or 101b of a foamed material which also influences the energy restitution, shock absorbance and playing characteristics of the artificial grass pitch.

Fig. 10b illustrates another embodiment in which the substrate element 100 is composed of three layers 101a, 101b and 101c. The adjacent layers preferably have a mutually different composition, so that it is possible to achieve efficient energy restitution and shock absorbance of the pitch structure by selecting materials of different hardness.

It is essential to note that in all the above-mentioned exemplary embodiments of a substrate element according to the invention the substrate element has a hardness of between 30-70 Sh(A). More specifically, it has been found that a hardness of 40-65 Sh(A) produces efficient energy restitution and shock absorbance, if an artificial grass pitch formed in this way is composed of a substrate made up of such substrate elements. Styrene butadiene rubber can be used as a suitable material, which has such a desired hardness. As an alternative or in addition, EPDM rubber can also be used as material.

Tests have shown that UV-stabilized SBR rubber is particularly suitable as a raw material for producing such substrate elements, in which case the SBR rubber material used contains as much recycled rubber as possible, in particular contains 50-70 % by weight of recycled rubber. Such rubber materials having the desired hardness provide optimum energy restitution and shock absorbance, so that players playing on an artificial grass pitch which has been produced in this way suffer as few injuries as possible and, in addition, the playing characteristics of a natural grass pitch are replicated as closely as possible.

The abovementioned rubber materials of the desired hardness can be processed in a simple manner by means of a pressing operation into rubber panels, each of which forms a panel element. Rubber panel elements which have been pressed in this way can be coupled to one another in the usual manner which has already been explained above by coupling means in order to produce an assembled substrate for an artificial grass pitch.

In addition to the abovementioned elastomer materials and rubber materials, it is possible to add fillers and/or an antistatic agent to prevent the build-up of static electricity in such a substrate element.

With regard to the embodiment in Fig. 10a and Fig. 10b, it should be noted that each layer 101a-101b-101c can be produced by means of pressing, in which case each elastomer or rubber material used has a different hardness in each layer.

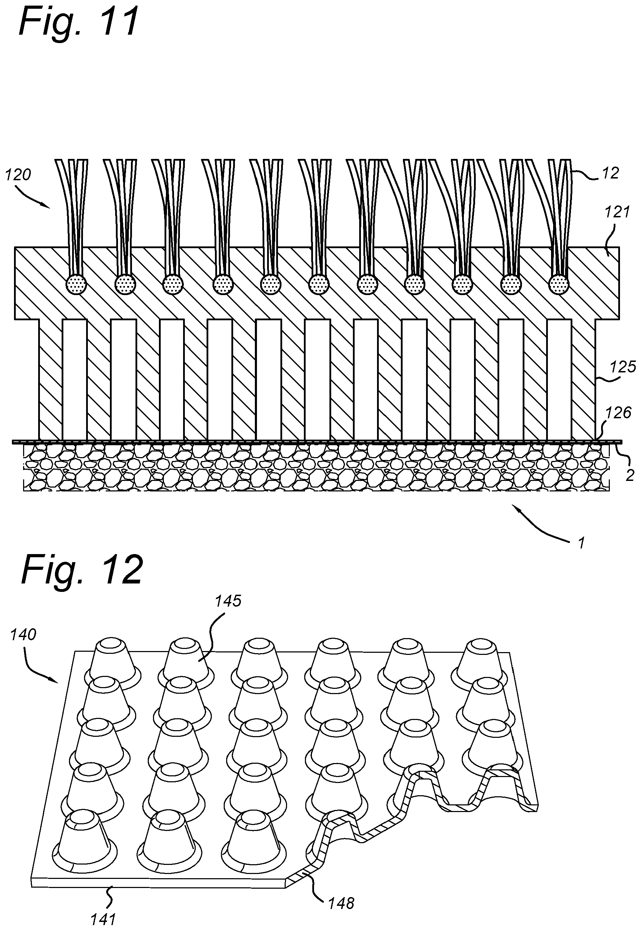

Figure 11 shows a substrate element 120 according to a further embodiment of the invention in cross-section. The substrate element 120 differs from previous embodiments in that the substrate body 121 is provided with protuberances 125 extending downwards from its lower side. Artificial grass fibres 12 are embedded in the substrate body 121 and extend from the upper side. The substrate element 120 is supported on a rigid undersurface 1, which has been covered by a layer of geotextile 2, preventing the protuberances from embedding into the undersurface 1. The substrate element 120 according to this embodiment operates in substantially the same way as those of previous embodiments with the exception that the bending and collapse of the protuberances is slightly different due to the fact that the free ends 126 are partially restrained against lateral movement by their contact with the undersurface 1. Additionally, the fact that in this embodiment no protuberances extend between the grass fibres 12 means that other properties of the playing surface may be different, including e.g. ball roll and rotational resistance. Such a configuration is well adapted to situations where a shorter grass pile is desirable such as hockey or tennis. It is also understood that additional protuberances (not shown) may be provided on the upper side of the substrate body 121 and that both sets of protuberances may complement each other.

Figure 12 shows a substrate element 140 according to a yet further embodiment of the invention. According to this embodiment, the substrate element 140 is deformed during manufacturing to provide hollow protuberances 145 that extend upwards from the substrate body 141. The thickness of the walls 148 of the protuberances is important in determining the strength of the protuberances and its collapse mechanism. It will be understood that also this embodiment may be tufted with artificial grass extending in the direction of the protuberances 145 or in the opposite direction in the case that the protuberances 145 are directed downwards.

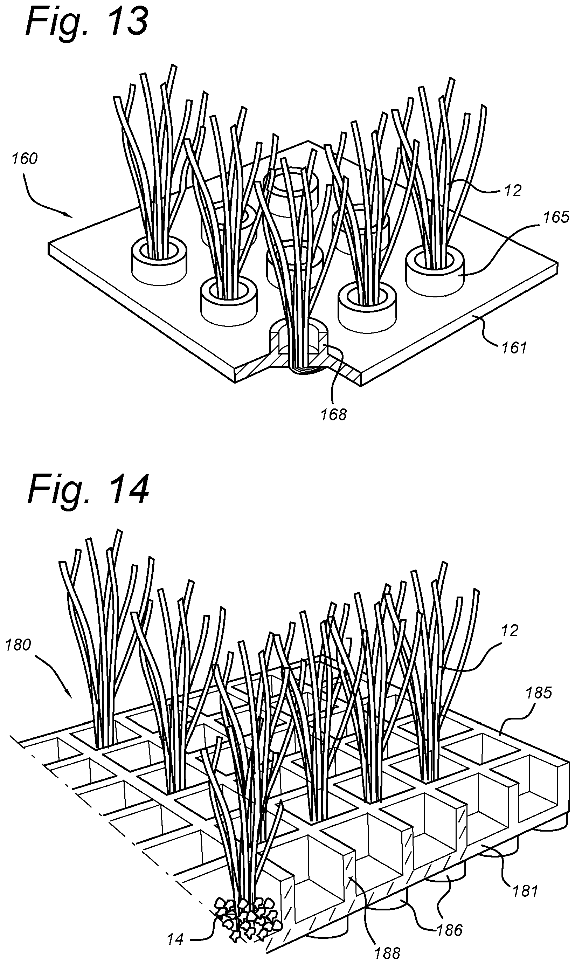

Figure 13 shows a substrate element 160 according to a still further embodiment of the invention in which open cylindrical protuberances 165 are provided extending upwards from the substrate body 161. Each protuberance 165 has a wall 168 which has a thickness and height chosen to permit the bending and collapse properties discussed above. Artificial grass fibres 12 are tufted through the substrate body 161 and extend through the cylindrical protuberances 165. The skilled person will understand that these grass fibres 12 may be located elsewhere on the substrate body 161.

Figure 14 shows a substrate element 180 having a single extended protuberance 185 in the form of an grid of walls 188 upstanding from the substrate body 181. Protrusions 186 extending downwards from the substrate body 181 are also provided. These protrusions 186 assist with drainage and also reduce the material usage while maintaining the required energy absorption. Additional openings (not shown) through the substrate body 181 for drainage purposes may be provided. The substrate body 181 is tufted with artificial grass fibres 12. In use, infill material 14 is provided and retained by the walls 188.

### EXAMPLE

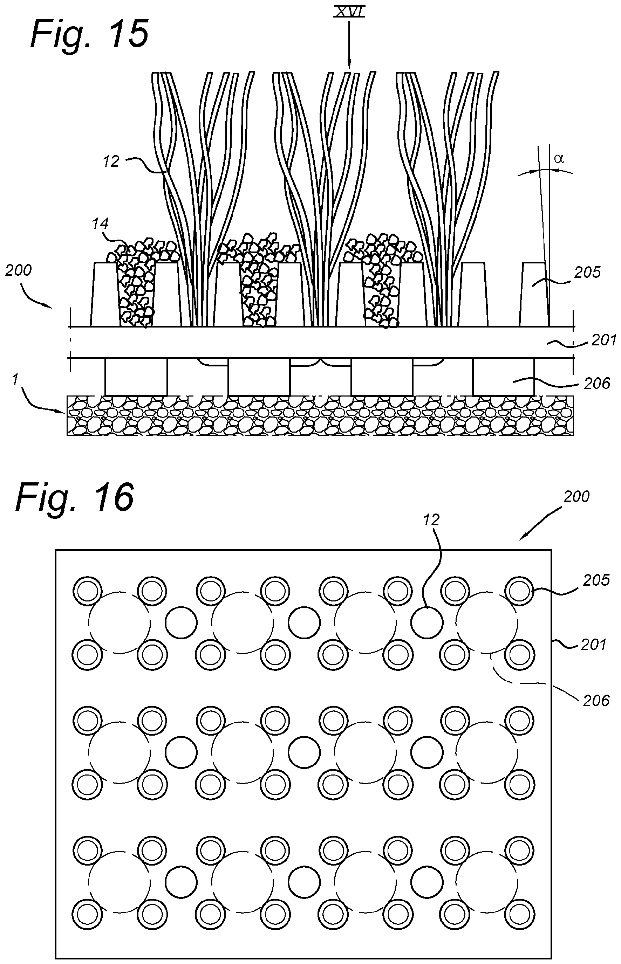

A portion of substrate 200 as shown in Figure 15 was manufactured and tested. The substrate 200 was formed of SBR rubber, having a Shore hardness of 64+/-1 Sh(A). The substrate body 201 had a thickness of 4 mm and the protuberances 205 had a height of 9 mm, a width of 4 mm at the base, 3 mm at the free end and a respective spacing of 8 mm. The taper angle α was 2.5 degrees. On the underside of the substrate body 201, protrusions 206 of 8 mm diameter were provided extending 5 mm. The spacing between the protrusions 206 was 16 mm. The substrate was tufted with a pile of 35 mm polyethylene grass blades every 16 mm.

Figure 16 is a plan view of the substrate 200 of Figure 15, indicating the relative positioning of the protuberances 205 and protrusions 206. As can be noted, the protuberances 205 are offset from the protrusions 206. As a result, forces applied to the free end of the protuberances 205 will be transmitted to the undersurface 1 via the protrusions 206 in an indirect line, passing through the substrate body 201. Such an indirect force path through the substrate 200 ensures that both compressive and tensile forces will be at play, the latter being particularly relevant for energy absorption.

The substrate 200 was placed on a solid surface 1 and infilled with 22 mm of organic infill 14 (coconut husk). Testing according to FIFA tests 4A, 5A and 11 was carried out, involving three repetitions of each test and an average of the results. The results are shown as Sample A in Table 1 and indicate that the integrated playing surface achieved an energy restitution value 31%, a shock absorbance of 60.2% and a vertical deformation of 8.5 mm. All results were within the FIFA recommendations.

**Table 1**

| Sample | Shock Absorption % | Energy Restitution % | Vertical Deformation mm |
|---|---|---|---|
| A | 60.2 | 31 | 8.5 |
| B | 36 | 56 | |
| C | 44 | 45 | |
| D | 49 | 35 | |
| E | 51 | 38 | |
| F | 40 | 43 | |
| G | 53 | 33 | |

The test was repeated using similar substrates without grass tufting or infill and using protuberances of different lengths and substrates of different hardness as described below:
Sample B was similar to Sample A but used SBR rubber of hardness 37 Sh(A). The protuberances were of 5 mm length;
Sample C was identical to Sample B but used SBR rubber of hardness 48 Sh(A);
Sample D was identical to Sample C but used SBR rubber of hardness 64 Sh(A);
Sample E was identical to Sample D but placed upside down with the protuberances directed downwards;
Sample F used EPDM rubber having a hardness estimated to be about 35 Sh(A) and protrusions having a length of 11 mm, a width of 6 mm and a spacing of 6 mm; Sample G was identical in form to Sample F but used EPDM rubber having an estimated hardness of 60 Sh(A).

The results show that for a substrate alone, without grass or infill, a wide variation in properties can be achieved, including values for energy restitution below 40% and shock absorbance above 50%.

Thus, the invention has been described by reference to certain embodiments discussed above. It will be recognized that these embodiments are susceptible to various modifications and alternative forms well known to those of skill in the art. Many modifications in addition to those described above may be made to the structures and techniques described herein without departing from the scope of the invention.

## Claims

1. Substrate element (20) for use in an artificial grass pitch, the substrate element comprising a substrate body (25) and a plurality of protuberances (25a, 25b, 25c) integrally formed with said substrate body, whereby the protuberances are evenly distributed across one of its surfaces and extending therefrom at a density of between 0.1 and 8 protuberances per square centimetre, and whereby the protuberances have a length of between 5 mm and 15 mm, **characterised in that** the substrate element has a hardness of between 30 Sh(A) and 70 Sh(A) and **in that** the protuberances are elongate, having a length greater than their width, whereby the protuberances are collapsible and can absorb energy by collapsing from an upright position to a bent position when subjected to an axial load.

2. Substrate element according to Claim 1, wherein the substrate element has a hardness of 50-65 Sh(A).

3. Substrate element according to Claim 1 or 2, wherein the substrate element is made of rubber, preferably styrene butadiene rubber or EPDM rubber.

4. Substrate element according to one or more of the preceding claims, wherein the substrate body is composed of several layers, preferably each having a different hardness Sh(A).

5. Substrate element according to one or more of the preceding claims, wherein the substrate element comprises a foamed material.

6. Substrate element according to one or more of the preceding claims, wherein the protuberances are distributed at a density of between 1 and 2 protuberances per square centimetre.

7. Substrate element according to one or more of the preceding claims, wherein the substrate element is provided with reinforcement, preferably comprising reinforcing filaments (110, 111) or fabric embedded or otherwise incorporated in the substrate element.

8. Substrate element according to one or more of the preceding claims, wherein the protuberances have a shape factor of less than 10, preferably between 2 and 5.

9. Substrate element according to one or more of the preceding claims, wherein the protuberances have a round or elongate cross section.

10. Substrate element according to one or more of the preceding claims, wherein free ends of the protuberances are rounded and/or the protuberances are tapered from the surface towards their free ends.

11. Substrate element according to one or more of the preceding claims, wherein the protuberances extend from the upper side of the substrate body.

12. Substrate element according to one or more of the preceding claims, wherein each substrate element is provided with coupling elements for cooperating with corresponding coupling elements on at least one other substrate element.

13. Substrate element according to one or more of the preceding claims, wherein the substrate element further comprises artificial grass fibres (12) attached to the substrate body, preferably extending between and beyond the protuberances.

14. Artificial grass pitch, comprising a substrate composed of several substrate elements according to one or more of the preceding claims.

15. A method of manufacturing an artificial grass pitch according to claim 14, the substrate having a shock absorption value of at least 50% and an energy restitution value of less than 40%, by:
providing the resilient substrate body (25) having a body thickness and a hardness of between 30 Sh(A) and 70 Sh(A);
providing the elongate collapsible protuberances (25a, 25b, 25c) extending from the substrate body, the elongate collapsible protuberances being arranged to absorb energy by collapsing from an upright position to a bent position when subjected to an axial load; and
forming a grass pile of artificial grass fibres (12) extending from the upper side of the substrate.

## Patentansprüche

1. Substratelement (20) zur Verwendung in einem Kunstrasenfeld, wobei das Substratelement einen Substratkörper (25) und eine Vielzahl von mit dem Substratkörper (25) einstückig ausgebildeten Vorsprüngen (25a, 25b, 25c) umfasst, wobei die Vorsprünge gleichmäßig über einer seiner Oberflächen verteilt sind und sich von ihm in einer Dichte zwischen 0,1 und 8 Vorsprüngen pro Quadratzentimeter erstrecken und wobei die Vorsprünge eine Länge zwischen 5 mm und 15 mm haben, **dadurch gekennzeichnet, dass** das Substratelement eine Härte zwischen 30 Sh(A) und 70 Sh(A) hat und dass die Vorsprünge (25a, 25b, 25c) mit einer Länge, die größer als ihre Breite ist, länglich sind, wobei die Vorsprünge klappbar sind und Energie absorbieren können, indem sie bei axialer Belastung von einer aufrechten Position in eine gebogene Position klappen.

2. Substratelement nach Anspruch 1, wobei das Substratelement eine Härte von 50-65 Sh(A) hat.

3. Substratelement nach Anspruch 1 oder 2, wobei das Substratelement aus Kautschuk, vorzugsweise Styrol-Butadien-Kautschuk oder EPDM-Kautschuk, besteht.

4. Substratelement nach einem oder mehr der vorstehenden Ansprüche, wobei sich der Substratkörper aus mehreren Lagen zusammensetzt, von denen jede vorzugsweise eine unterschiedliche Härte Sh(A) hat.

5. Substratelement nach einem oder mehr der vorstehenden Ansprüche, wobei das Substratelement einen Schaumstoff umfasst.

6. Substratelement nach einem oder mehr der vorstehenden Ansprüche, wobei die Vorsprünge in einer Dichte zwischen 1 und 2 Vorsprüngen pro Quadratzentimeter verteilt sind.

7. Substratelement nach einem oder mehr der vorstehenden Ansprüche, wobei das Substratelement mit einer Verstärkung versehen ist, die vorzugsweise Verstärkungsfäden (110, 111) oder -gewebe umfasst, die/das in dem Substratelement eingebettet oder anderweitig eingebaut sind/ist.

8. Substratelement nach einem oder mehr der vorstehenden Ansprüche, wobei die Vorsprünge einen Formfaktor von weniger als 10, vorzugsweise zwischen 2 und 5, haben.

9. Substratelement nach einem oder mehr der vorstehenden Ansprüche, wobei die Vorsprünge einen runden oder länglichen Querschnitt haben.

10. Substratelement nach einem oder mehr der vorstehenden Ansprüche, wobei freie Enden der Vorsprünge gerundet sind und/oder die Vorsprünge von der Oberfläche aus in Richtung ihrer freien Enden verjüngt sind.

11. Substratelement nach einem oder mehr der vorstehenden Ansprüche, wobei sich die Vorsprünge von der Oberseite des Substratkörpers aus erstrecken.

12. Substratelement nach einem oder mehr der vorstehenden Ansprüche, wobei jedes Substratelement mit Kopplungselementen zur Zusammenarbeit mit entsprechenden Kopplungselementen auf mindestens einem anderen Substratelement versehen ist.

13. Substratelement nach einem oder mehr der vorstehenden Ansprüche, wobei das Substratelement außerdem Kunstrasenfasern (12) umfasst, die am Substratkörper angebracht sind, wobei sie sich vorzugsweise zwischen den Vorsprüngen und über die Vorsprünge hinaus erstrecken.

14. Kunstrasenfeld, das ein Substrat umfasst, das sich aus mehreren Substratelementen gemäß einem oder mehr der vorstehenden Ansprüche zusammensetzt.

15. Verfahren zur Herstellung eines Kunstrasenfelds nach Anspruch 14, wobei das Substrat einen Stoßdämpfungswert von mindestens 50% und einen Energierückgabewert von weniger als 40% hat, durch:
Vorsehen des federnden Substratkörpers (25), der eine Körperdicke und eine Härte zwischen 30 Sh(A) und 70 Sh(A) hat;
Vorsehen der länglichen, klappbaren Vorsprünge (25a, 25b, 25c), die sich vom Substratkörper aus erstrecken, wobei die länglichen, klappbaren Vorsprünge so angeordnet sind, dass sie Energie absorbieren, indem sie bei axialer Belastung von einer aufrechten Position in eine gebogene Position klappen; und
Ausbilden eines Rasenflorschichts aus Kunstrasenfasern (12), der sich von der Oberseite des Substrats aus erstreckt.

## Revendications

1. Elément de substrat (20) destiné à être utilisé dans un gazon artificiel, l'élément de substrat comprenant un corps de substrat (25) et une pluralité de protubérances (25a, 25b, 25c) formant partie intégrante dudit corps de substrat (25), dans lequel les protubérances sont réparties de façon régulière sur l'une de ses faces et s'étendent à partir de celle-ci avec une densité comprise entre 0,1 et 8 protubérances par centimètre carré, et dans lequel les protubérances présentent une longueur comprise entre 5 mm et 15 mm,
**caractérisé en ce que** l'élément de substrat présente une dureté comprise entre 30 Sh(A) et 70 Sh(A) et **en ce que** les protubérances (25a, 25b, 25c) sont de forme allongée, avec une longueur supérieure à leur largeur,
dans lequel les protubérances sont pliables et peuvent absorber de l'énergie en se pliant d'une position droite à une position recourbée lorsqu'elles sont soumises à une charge axiale.

2. Elément de substrat selon la revendication 1, dans lequel l'élément de substrat présente une dureté comprise entre 50 et 65 Sh(A).

3. Elément de substrat selon la revendication 1 ou 2, dans lequel l'élément de substrat est en caoutchouc, de préférence en caoutchouc styrène-butadiène ou caoutchouc EPDM.

4. Elément de substrat selon une ou plusieurs des revendications précédentes, dans lequel le corps de substrat est composé de plusieurs couches, chacune présentant de préférence une dureté Sh(A) différente.

5. Elément de substrat selon une ou plusieurs des revendications précédentes, dans lequel l'élément de substrat comprend un matériau en mousse.

6. Elément de substrat selon une ou plusieurs des revendications précédentes, dans lequel les protubérances sont réparties selon une densité comprise entre 1 et 2 protubérances par centimètre carré.

7. Elément de substrat selon une ou plusieurs des revendications précédentes, dans lequel l'élément de substrat est pourvu d'un renfort, comprenant de préférence des filaments de renfort (110, 111) ou un tissu inséré ou incorporé d'une autre façon dans l'élément de substrat.

8. Elément de substrat selon une ou plusieurs des revendications précédentes, dans lequel les protubérances présentent un facteur de forme inférieur à 10, de préférence compris entre 2 et 5.

9. Elément de substrat selon une ou plusieurs des revendications précédentes, dans lequel les protubérances présentent une section transversale circulaire ou allongée.

10. Elément de substrat selon une ou plusieurs des revendications précédentes, dans lequel les extrémités libres des protubérances sont arrondies et/ou les protubérances sont effilées de la surface à leurs extrémités libres.

11. Elément de substrat selon une ou plusieurs des revendications précédentes, dans lequel les protubérances s'étendent à partir du côté supérieur du corps de substrat.

12. Elément de substrat selon une ou plusieurs des revendications précédentes, dans lequel chaque élément de substrat est pourvu d'éléments de couplage pour coopérer avec des éléments de couplage correspondants sur au moins un autre élément de substrat.

13. Elément de substrat selon une ou plusieurs des revendications précédentes, dans lequel l'élément de substrat comprend en outre des fibres de gazon artificiel (12) fixées au corps du substrat, de préférence s'étendant entre les protubérances et les dépassant.

14. Gazon artificiel, comprenant un substrat composé de plusieurs éléments de substrat selon une ou plusieurs des revendications précédentes.

15. Procédé de fabrication d'un gazon artificiel selon la revendication 14, le substrat présentant une valeur d'amortissement des chocs d'au moins 50 % et une valeur de restitution de l'énergie inférieure à 40 %, consistant à :
fournir le corps de substrat élastique (25) présentant une épaisseur de corps et une dureté comprise entre 30 Sh(A) et 70 Sh(A) ;
fournir les protubérances repliables allongées (25a, 25b, 25c) s'étendant depuis le corps de substrat, les protubérances pliables allongées étant disposées de manière à absorber l'énergie en se pliant d'une position droite à une position recourbée lorsqu'ils sont soumis à une charge axiale ; et
former un tapis de gazon de fibres de gazon artificiel (12) s'étendant à partir du côté supérieur du substrat.
